# EUROPEAN PATENT APPLICATION

(11) **EP 4 691 300 A1**
(43) Date of publication of application: **11.02.2026**
(21) Application number: 24897847.0
(22) Date of filing: 26.09.2024
(51) Int. Cl.: A24F 40/50, A24F 40/53, A24F 40/46, G01N 29/02

(54) **AEROSOL-GENERATING DEVICE**

(30) Priority: 01.12.2023 KR 20230172291
(71) Applicant: KT&G Corporation, Daedeok-gu Daejeon 34337 (KR)
(72) Inventor: JUNG, Jin Chul, Daejeon 34079 (KR)
(74) Representative: Ter Meer Steinmeister & Partner
(86) International application number: PCT/KR2024/014661
(87) International publication number: WO 2025/116248

(57) **Abstract**

According to an embodiment, an aerosol-generating device is provided, which comprises: a battery for supplying power used for operating the aerosol-generating device; a heater for heating an aerosol-generating article; an ultrasonic sensing unit for outputting ultrasonic waves according to a plurality of preset frequencies to the aerosol-generating article and receiving ultrasonic waves reflected from the aerosol-generating article; and a control unit for analyzing a constituent material of the aerosol-generating article by using a time difference value between transmission time of the output ultrasonic waves according to the plurality of frequencies and reception time of the reflected ultrasonic waves corresponding thereto, and an intensity difference value between the intensity of the output ultrasonic waves and the intensity of the reflected ultrasonic waves.

## Description

### Technical Field

Embodiments of the present invention relate to an aerosol generating device.

### Background Art

There is an increasing demand for aerosol generating devices that generate an aerosol in a non-combustion manner, replacing the manner in which a cigarette is combusted to generate an aerosol. The aerosol generating device is, for example, a device that performs a function of generating an aerosol from an aerosol generating material in a non-combustion manner and supplying the aerosol to a user, or generating an aerosol having a flavor by passing a vapor generated from an aerosol generating material through a fragrance medium.

An example of an aerosol generating device may include an aerosol generating device that accommodates a replaceable aerosol generating article and generates an aerosol from the accommodated aerosol generating article.

### Disclosure

### Technical Problem

Unlike traditional cigarettes, aerosol generating articles often differ in the structure and shape of the medium in order to vary the manner of heating or the composition of taste. The type of the aerosol generating article may be visually determined through product specifications and the like. However, there is a problem in that it is difficult to visually check the aerosol generating article and determine the type of stick in the absence of a product specification, and it is also impossible to determine this when the stick is inserted into an aerosol generating device.

Ultrasonic waves may vary in the speed of transmission or the amount of attenuation depending on the density of the medium or the compressibility of the material.

In order to solve this problem, embodiments provide an aerosol generating device capable of determining a feature according to a configuration of a medium by using the above-described characteristics of ultrasonic waves.

### Technical Solution

According to an embodiment, there is provided an aerosol generating device, including: a battery configured to supply power used to operate the aerosol generating device;
a heater configured to heat an aerosol generating article; an ultrasonic sensing unit configured to output ultrasonic waves corresponding to a plurality of predetermined frequencies to an aerosol generating article and receive ultrasonic waves reflected from the aerosol generating article; and a control unit configured to analyze constituent materials of the aerosol generating article by using a time difference value between a transmission time of output ultrasonic waves and a reception time of reflected ultrasonic waves corresponding thereto according to the plurality of frequencies and an intensity difference value between an intensity of the output ultrasonic waves and an intensity of the reflected ultrasonic waves.

The control unit may be configured to analyze the constituent materials of the aerosol generating article for each region using the output ultrasonic waves corresponding to the plurality of frequencies and the reflected ultrasonic waves corresponding thereto.

The control unit may be configured to analyze constituent materials of the aerosol generating article by assigning different weights to the plurality of frequencies.

The control unit may include a deep learning model trained to cause the constituent materials of the aerosol generating article to be an output layer with respect to the input output ultrasonic waves and the reflected ultrasonic waves.

The aerosol generating device may further include a temperature sensor disposed at a periphery of the aerosol generating article.

The control unit may be configured to adjust a frequency range of the output ultrasonic waves by using temperature data measured by the temperature sensor.

The control unit may be configured to analyze a state of the constituent materials of the aerosol generating article by using the temperature data measured by the temperature sensor, the output ultrasonic waves according to the plurality of frequencies, and the reflected ultrasonic waves corresponding thereto.

According to an embodiment, there is provided an aerosol generating device, including: a battery configured to supply power used to operate the aerosol generating device; a heater configured to heat an aerosol generating article; a liquid storage unit; a reflecting unit disposed at a predetermined distance from the liquid storage unit; an ultrasonic sensing unit configured to output ultrasonic waves corresponding to a plurality of predetermined frequencies to the liquid storage unit and receive ultrasonic waves reflected from the liquid storage unit and the reflecting unit; and a control unit configured to analyze constituent materials of the aerosol generating article by using a time difference value between a transmission time of output ultrasonic waves and a reception time of reflected ultrasonic waves corresponding thereto according to the plurality of frequencies and an intensity difference value between an intensity of the output ultrasonic waves and an intensity of the reflected ultrasonic waves.

### Advantageous Effects

The aerosol generating device according to an embodiment may determine the type of an aerosol generating article in a non-contact manner.

In addition, constituent materials for each region of the aerosol generating article may be determined.

In addition, the state of the aerosol generating article in accordance with the ambient temperature thereof may be determined in a non-contact manner.

### Description of Drawings

FIGS. 1 to 3 are diagrams illustrating examples in which a cigarette is inserted into an aerosol generating device according to an embodiment of the present invention.
FIGS. 4 and 5 are diagrams illustrating examples of a cigarette according to an embodiment.
FIG. 6 is a block diagram of an aerosol generating device according to another embodiment.
FIG. 7 is a diagram for describing an aerosol generating device according to an embodiment.
FIG. 8 is a diagram for describing an aerosol generating device according to an embodiment.
FIG. 9 is a diagram for describing an operation of a control unit according to another embodiment.
FIG. 10 is a diagram for describing an aerosol generating device according to another embodiment.
FIG. 11 is a diagram for describing an operation of an aerosol generating device according to another embodiment.
FIG. 12 is a diagram for describing an aerosol generating device according to still another embodiment.
FIGS. 13 to 17 are operational flowcharts of an aerosol generating device according to an embodiment.

### Mode for Invention

The terms used in the embodiments are selected from general terms currently widely used as much as possible in consideration of the functions in the present invention, but may vary depending on the intention or precedent of those skilled in the art, the emergence of new technologies, and the like. In addition, in certain cases, there are also terms arbitrarily selected by the applicant, and in this case, the meaning thereof will be described in detail in the corresponding part of the detailed description of the invention. Therefore, the terms used in the present invention should be defined based on the meaning of the terms and the overall content of the present invention, rather than the mere names of the terms.

Throughout the specification, when a part is said to "include" or "comprise" an element, unless otherwise specified, it means that the part may further include other elements instead of excluding the other elements. In addition, the terms "unit," "module," and the like described in the specification mean a unit that processes at least one function or operation, and may be implemented by hardware or software, or may be implemented by a combination of hardware and software.

Hereinafter, embodiments of the present disclosure will be described in detail with reference to the accompanying drawings so that those skilled in the art may easily implement the embodiments. The present invention may, however, be implemented in many different forms and should not be construed as limited to the embodiments set forth herein.

The following describes embodiments of the present invention in detail with reference to the drawings.

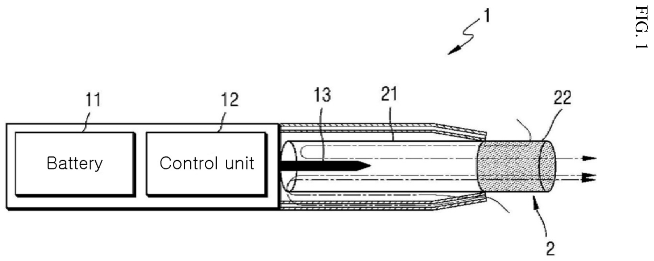

FIGS. 1 to 3 are diagrams illustrating examples in which a cigarette is inserted into an aerosol generating device.

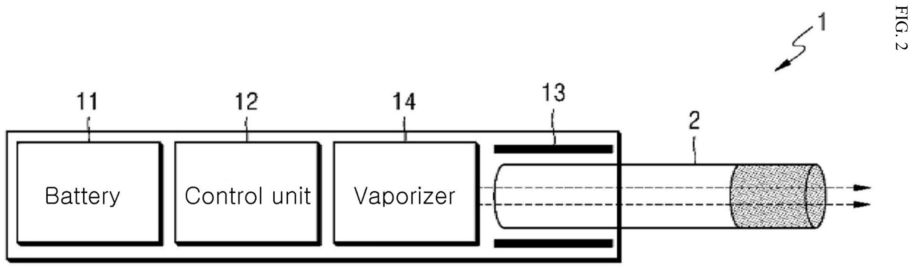

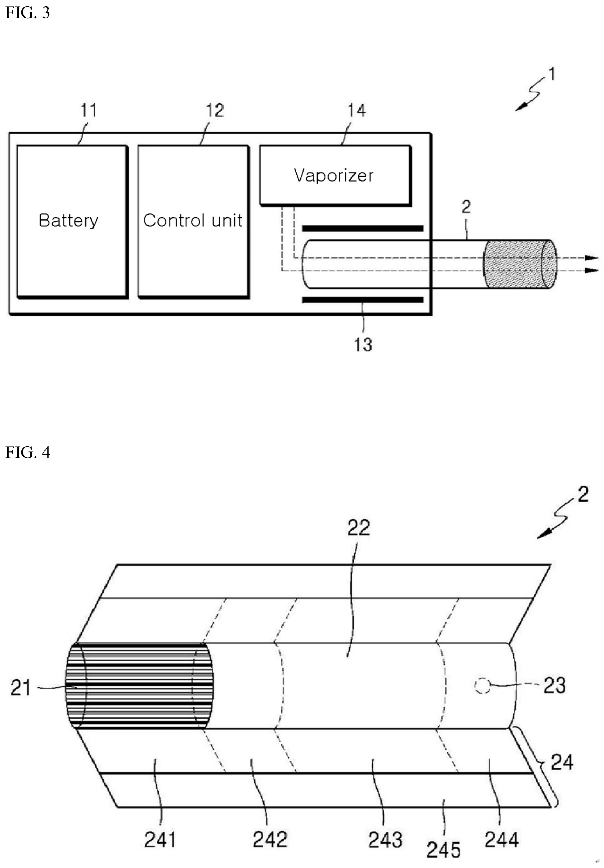

Referring to FIG. 1, an aerosol generating device 1 includes a battery 11, a control unit 12, and a heater 13. Referring to FIGS. 2 and 3, the aerosol generating device 1 further includes a vaporizer 14. In addition, a cigarette 2 may be inserted into the interior space of the aerosol generating device 1.

In the aerosol generating device 1 shown in FIGS. 1 to 3, components related to the present embodiment are shown. Therefore, those skilled in the art related to the present embodiment may understand that other general-purpose components other than the components shown in FIGS. 1 to 3 may be further included in the aerosol generating device 1.

In addition, although the heater 13 is shown to be included in the aerosol generating device 1 in FIGS. 2 and 3, the heater 13 may be omitted as necessary.

FIG. 1 illustrates that the battery 11, the control unit 12, and the heater 13 are arranged in a line. In addition, FIG. 2 illustrates that the battery 11, the control unit 12, the vaporizer 14, and the heater 13 are arranged in a line. In addition, FIG. 3 illustrates that the vaporizer 14 and the heater 13 arranged in parallel. However, the internal structure of the aerosol generating device 1 is not limited to that shown in FIGS. 1 to 3. In other words, depending on the design of the aerosol generating device 1, the arrangement of the battery 11, the control unit 12, the heater 13, and the vaporizer 14 may vary.

When the cigarette 2 is inserted into the aerosol generating device 1, the aerosol generating device 1 may operate the heater 13 and/or the vaporizer 14 to generate an aerosol. The aerosol generated by the heater 13 and/or the vaporizer 14 passes through the cigarette 2 and is delivered to the user.

When necessary, the aerosol generating device 1 may heat the heater 13 even when the cigarette 2 is not inserted into the aerosol generating device 1.

The battery 11 supplies power that is used to operate the aerosol generating device 1. For example, the battery 11 may supply power so that the heater 13 or the vaporizer 14 may be heated, and may supply power necessary for the control unit 12 to operate. In addition, the battery 11 may supply power necessary for a display, a sensor, a motor, or the like installed in the aerosol generating device 1 to operate.

The control unit 12 generally controls the operation of the aerosol generating device 1. Specifically, the control unit 12 controls the operation of the battery 11, the heater 13, and the vaporizer 14, as well as other components included in the aerosol generating device 1. In addition, the control unit 12 may check the state of each of the components of the aerosol generating device 1 to determine whether the aerosol generating device 1 is in an operable state.

The control unit 12 includes at least one processor. The processor may be implemented as an array of multiple logic gates, or may be implemented as a combination of a general-purpose microprocessor and a memory storing a program that may be executed on the microprocessor. In addition, those skilled in the art may understand that the process may also be implemented in other forms of hardware.

The heater 13 may be heated by power supplied from the battery 11. For example, when a cigarette is inserted into the aerosol generating device 1, the heater 13 may be located outside of the cigarette. Thus, the heated heater 13 may raise the temperature of the aerosol generating material in the cigarette.

The heater 13 may be an electrically resistive heater. For example, the heater 13 may include an electrically conductive track, and the heater 13 may be heated according to a current flowing through the electrically conductive track. However, the heater 13 is not limited to the above-described example, and any heater may be applied without limitation as long as it may be heated to a desired temperature. Here, the desired temperature may be preset in the aerosol generating device 1 or may be set to a desired temperature by a user.

Meanwhile, as another example, the heater 13 may be an induction heating type heater. Specifically, the heater 13 may include an electrically conductive coil for heating the cigarette in an induction heating manner, and the cigarette may include a susceptor that may be heated by the induction heating type heater.

For example, the heater 13 may include a tubular heating element, a plate-like heating element, a needle-like heating element, or a rod-like heating element, and may heat the inside or the outside of the cigarette 2 according to the shape of the heating element.

In addition, a plurality of heaters 13 may be disposed in the aerosol generating device 1. At this time, the plurality of heaters 13 may be disposed to be inserted into the cigarette 2, or may be disposed outside the cigarette 2. In addition, some of the plurality of heaters 13 may be disposed to be inserted into the cigarette 2, and the rest may be disposed outside the cigarette 2. In addition, the shape of the heater 13 is not limited to the shapes shown in FIGS. 1 to 3, and may be manufactured into various shapes.

The vaporizer 14 may heat a liquid composition to generate an aerosol, and the generated aerosol may pass through the cigarette 2 and be delivered to a user. In other words, the aerosol generated by the vaporizer 14 may travel along the airflow passage of the aerosol generating device 1, and the airflow passage may be configured such that the aerosol generated by the vaporizer 14 may pass through the cigarette and be delivered to the user.

For example, the vaporizer 14 may include a liquid storage unit, a liquid delivery means, and a heating element, but is not limited thereto. For example, the liquid storage unit, the liquid delivery means, and the heating element may be included in the aerosol generating device 1 as independent modules.

The liquid storage unit may store the liquid composition. For example, the liquid composition may be a liquid including a tobacco containing material including a volatile tobacco flavor component, and may also be a liquid including a non-tobacco material. The liquid storage unit may be manufactured such that it may be detached/attached from/to the vaporizer 14, or may be manufactured integrally with the vaporizer 14.

For example, the liquid composition may include water, a solvent, ethanol, a plant extract, a fragrant material, a flavoring agent, or a vitamin mixture. The fragrant material may include menthol, peppermint, spearmint oil, various fruit fragrant ingredients, and the like, but is not limited thereto The flavoring agent may include ingredients that may provide a variety of flavors or savors to a user. The vitamin mixture may be a mixture of at least one of vitamin A, vitamin B, vitamin C, and vitamin E, but is not limited thereto. The liquid composition may also include an aerosol forming agent, such as glycerin and propylene glycol.

The liquid delivery means may deliver the liquid composition of the liquid storage unit to the heating element. For example, the liquid delivery means may be a wick such as cotton fibers, ceramic fibers, glass fibers, or porous ceramics, but is not limited thereto.

The heating element is an element for heating the liquid composition delivered by the liquid delivery means. For example, the heating element may be a metal heating wire, a metal heating plate, a ceramic heater, or the like, but is not limited thereto In addition, the heating element may be composed of conductive filaments, such as nichrome wires, and may be arranged in a structure wound around the liquid delivery means. The heating element may be heated by a current supply and may transfer heat to the liquid composition in contact with the heating element to heat the liquid composition. As a result, an aerosol may be generated.

For example, the vaporizer 14 may be referred to as a cartomizer or an atomizer, but is not limited thereto.

Meanwhile, the aerosol generating device 1 may further include general-purpose components in addition to the battery 11, the control unit 12, the heater 13, and the vaporizer 14. For example, the aerosol generating device 1 may include a display capable of outputting visual information and/or a motor for outputting tactile information. In addition, the aerosol generating device 1 may include at least one sensor (a puff sensing sensor, a temperature sensing sensor, a cigarette insertion sensing sensor, etc.). In addition, the aerosol generating device 1 may be manufactured in a structure in which the external air may flow in or an internal gas may flow out even in a state in which the cigarette 2 is inserted.

Although not shown in FIGS. 1 to 3, the aerosol generating device 1 may constitute a system with a separate cradle. For example, the cradle may be used to charge the battery 11 of the aerosol generating device 1. Alternatively, the heater 13 may be heated in a state where the cradle and the aerosol generating device 1 are coupled.

The cigarette 2 may be similar to a common combustible cigarette. For example, the cigarette 2 may be divided into a first portion including an aerosol generating material and a second portion including a filter or the like. Alternatively, the second portion of the cigarette 2 may also include an aerosol generating material. For example, the aerosol generating material produced in the form of granules or capsules may be inserted into the second portion.

The entire first portion may be inserted into the interior of the aerosol generating device 1, and the second portion may be exposed to the outside. Alternatively, only a part of the first portion may be inserted into the interior of the aerosol generating device 1, or the entire first portion and a part of the second portion may be inserted. A user may inhale the aerosol with the second portion in the mouth. At this time, the aerosol is generated by the external air passing through the first portion, and the generated aerosol passes through the second portion and is delivered to the mouth of the user.

As an example, the external air may flow in through at least one air passage formed in the aerosol generating device 1. For example, the opening and closing of the air passage formed in the aerosol generating device 1 and/or the size of the air passage may be adjusted by a user. Accordingly, the amount of atomization, the smoking feeling, and the like may be adjusted by the user. As another example, the external air may flow into the interior of the cigarette 2 through at least one hole formed on the surface of the cigarette 2.

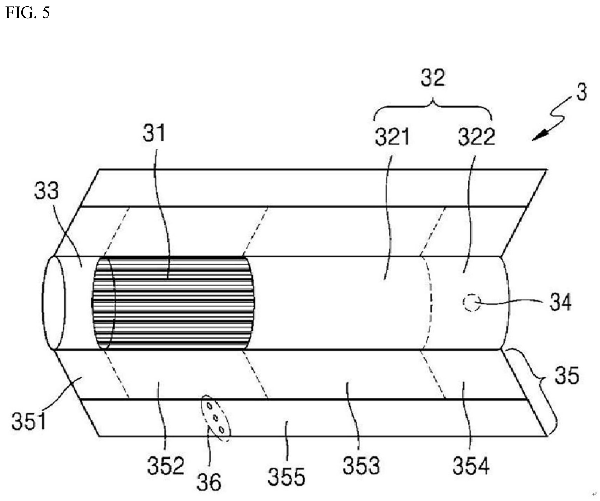

Hereinafter, with reference to FIGS. 4 and 5, examples of the cigarette 2 will be described.

FIGS. 4 and 5 are diagrams illustrating examples of a cigarette.

Referring to FIG. 4, the cigarette 2 includes a tobacco rod 21 and a filter rod 22. The first portion 21 described above with reference to FIGS. 1 to 3 includes the tobacco rod 21, and the second portion 22 includes the filter rod 22.

The filter rod 22 is shown as a single segment in FIG. 4, but is not limited thereto. In other words, the filter rod 22 may consist of a plurality of segments. For example, the filter rod 22 may include a segment that cools the aerosol and a segment that filters predetermined components contained in the aerosol. In addition, when necessary, the filter rod 22 may further include at least one segment that performs another function.

The diameter of the cigarette 2 may be within a range of 5 mm to 9 mm, and the length may be about 48 mm, but is not limited thereto. For example, the length of the tobacco rod 21 may be about 12 mm, the length of a first segment of the filter rod 22 may be about 10 mm, the length of a second segment of the filter rod 22 may be about 14 mm, and the length of a third segment of the filter rod 22 may also be about 12 mm.

The cigarette 2 may be packaged by at least one wrapper 24. The wrapper 24 may be formed with at least one hole through which the external air flows in or an internal gas flows out. As an example, the cigarette 2 may be wrapped by one wrapper 24. As another example, the cigarette 2 may be wrapped overlappingly by two or more wrappers 24. For example, the tobacco rod 21 may be wrapped by a first wrapper 241, and the filter rod 22 may be wrapped by wrappers 242, 243, and 244. Then, the entire cigarette 2 may be repackaged by a single wrapper 245. When the filter rod 22 consists of a plurality of segments, each segment may be wrapped by the wrappers 242, 243, and 244.

The first wrapper 241 and the second wrapper 242 may be made of general filter wrapping paper. For example, the first wrapper 241 and the second wrapper 242 may be porous wrapping paper or non-porous wrapping paper. In addition, the first wrapper 241 and the second wrapper 242 may be made of paper and/or an aluminum laminated paper packaging material having oil resistance.

The third wrapper 243 may be made of hard wrapping paper. For example, the basis weight of the third wrapper 243 may be within a range of 88 g/m² to 96 g/m², and may preferably be within a range of 90 g/m² to 94 g/m². In addition, the thickness of the third wrapper 243 may be within a range of 120 µm to 130 µm, and may preferably be 125 µm.

The fourth wrapper 244 may be made of an oil-resistant hard wrapping paper. For example, the basis weight of the fourth wrapper 244 may be within a range of 88 g/m² to 96 g/m², and may preferably be within a range of 90 g/m² and 94 g/m². In addition, the thickness of the fourth wrapper 244 may be within a range of 120 µm to 130 µm, and may preferably be 125 µm.

The fifth wrapper 245 may be made of sterilized paper (MFW). Here, the sterilized paper (MFW) means paper specially prepared so that the tensile strength, the water resistance, the smoothness, and the like are enhanced over ordinary paper. For example, the basis weight of the fifth wrapper 245 may be within a range of 57 g/m² to 63 g/m², and may preferably be 60 g/m². In addition, the thickness of the fifth wrapper 245 may be within a range of 64 µm to 70 µm, and may be preferably 67 µm.

The fifth wrapper 245 may include a predetermined material. Here, an example of the predetermined material may be silicone, but is not limited thereto. For example, silicone has properties such as heat resistance with little change with temperature, oxidation resistance, resistance to various chemicals, water repellency, or electrical insulation. However, any material, even one that is not silicone, may be applied (or coated) to the fifth wrapper 245 without limitation as long as it has the above-described properties.

The fifth wrapper 245 may prevent the combustion of the cigarette 2. For example, when the tobacco rod 21 is heated by the heater 13, there is a possibility that the cigarette 2 is combusted. Specifically, when the temperature rises above the ignition point of any one of the materials contained in the tobacco rod 21, the cigarette 2 may be combusted. Even in this case, since the fifth wrapper 245 includes a non-combustible material, the combustion of the cigarette 2may be prevented.

In addition, the fifth wrapper 245 may prevent a holder 1 from being contaminated by materials generated from the cigarette 2. By means of the user's puff, liquid materials may be generated from the cigarette 2. For example, an aerosol generated from the cigarette 2 may be cooled by the external air, thereby generating liquid materials (e.g., moisture, etc.). As the fifth wrapper 245 wraps the cigarette 2, liquid materials produced in the cigarette 2 may be prevented from leaking out of the cigarette 2.

The tobacco rod 21 includes an aerosol generating material. For example, the aerosol generating material may include, at least one of glycerin, propylene glycol, ethylene glycol, dipropylene glycol, diethylene glycol, triethylene glycol, tetraethylene glycol, and oleyl alcohol, but is not limited thereto. The tobacco rod 21 may also contain other additive materials, such as flavorings, humectants, and/or organic acids. In addition, a flavoring liquid such as menthol or a moisturizer may be added to the tobacco rod 21 by spraying the flavoring liquid onto the tobacco rod 21.

The tobacco rod 21 may be manufactured in various forms. For example, the tobacco rod 21 manufactured in the form of a sheet, or may be manufactured in the form of strands. In addition, the tobacco rod 21 may be manufactured in the form of cut tobacco sheets. In addition, the tobacco rod 21 may be surrounded by a thermally conductive material. For example, the thermally conductive material may be, a metal foil such as aluminum foil, but is not limited thereto. As an example, the thermally conductive material surrounding the tobacco rod 21 may evenly disperse the heat transferred to the tobacco rod 21 to improve the thermal conductivity applied to the tobacco rod, thereby improving the taste of tobacco. In addition, the thermally conducting material surrounding the tobacco rod 21 may function as a susceptor that is heated by the induction heating type heater. Here, although not shown in the drawings, the tobacco rod 21 may further include an additional susceptor in addition to the heat conductive material surrounding the outside.

The filter rod 22 may be a cellulose acetate filter. Meanwhile, the shape of the filter rod 22 is not limited. For example, the filter rod 22 may be a cylindrical rod or a tubular rod including a hollow therein. In addition, the filter rod 22 may be a recessed type rod. When the filter rod 22 consists of a plurality of segments, at least one of the plurality of segments may be manufactured into another shape.

A first segment of the filter rod 22 may be a cellulose acetate filter. For example, the first segment may be a tubular structure including a hollow therein. It is also possible to prevent the phenomenon that the inner material of the tobacco rod 21 is pushed back when the heater 13 is inserted by the first segment, and the effect of cooling the aerosol may also be generated. As the diameter of the hollow included in the first segment, an appropriate diameter within a range of 2 mm to 4.5 mm may be adopted, but it is not limited thereto.

As the length of the first segment, an appropriate length within a range of 4 mm to 30 mm may be adopted, but it is not limited thereto. Preferably, the length of the first segment may be 10 mm, but is not limited thereto.

The hardness of the first segment may be adjusted by adjusting the content of plasticizer in the manufacture of the first segment. In addition, the first segment may be manufactured by inserting a structure such as a film or a tube of the same or different material into the inside (for example, hollow).

A second segment of the filter rod 22 cools the aerosol generated by the heater 13 heating the tobacco rod 21. Thus, the user may inhale the aerosol cooled to an appropriate temperature.

The length or diameter of the second segment may be variously determined according to the shape of the cigarette 2. For example, the length of the second segment may be appropriately adopted within a range of 7 mm to 20 mm. Preferably, the length of the second segment may be about 14 mm, but is not limited thereto.

The second segment may be manufactured by weaving polymeric fibers. In this case, the fragrance liquid may be applied to the fibers made of the polymer. Alternatively, the second segment may be manufactured by weaving together a separate fiber coated with a flavoring liquid and a fiber made of a polymer. Alternatively, the second segment may be formed of a crimped polymer sheet.

For example, the polymer may be made of a material selected from the group consisting of polyethylene (PE), polypropylene (PP), polyvinyl chloride (PVC), polyethylene terephthalate (PET), polylactic acid (PLA), cellulose acetate (CA), and aluminum foil.

As the second segment is formed of a woven polymer fiber or a crimped polymer sheet, the second segment may include a single or a plurality of channels extending in the longitudinal direction. Herein, the channel refers to a passage through which a gas (e.g., air or aerosol) passes.

For example, the second segment formed of a crimped polymer sheet may be formed of a material having a thickness between about 5 µm and about 300 µm, for example, between about 10 µm and about 250 µm. In addition, the total surface area of the second segment may be between about 300 mm²/mm and about 1000 mm²/mm. In addition, an aerosol cooling element may be formed of a material having a specific surface area of between about 10 mm²/mg and about 100 mm²/mg.

Meanwhile, the second segment may include a thread containing volatile flavoring components. Herein, the volatile flavoring component may be menthol, but is not limited thereto. For example, the thread may be filled with a sufficient amount of menthol to provide at least 1.5 mg of menthol to the second segment.

The third segment of the filter rod 22 may be a cellulose acetate filter. The length of the third segment may be appropriately adopted within a range of 4 mm to 20 mm. For example, the length of the third segment may be about 12 mm, but is not limited thereto.

In the process of manufacturing the third segment, it may be manufactured such that flavor is generated by spraying a flavoring liquid on the third segment. Alternatively, a separate fiber coated with the flavoring liquid may be inserted into the third segment. The aerosol generated in the tobacco rod 21 cools as it passes through the second segment of the filter rod 22, and the cooled aerosol is delivered to the user through the third segment. Thus, when a flavoring element is added to the third segment, the persistence of the flavor delivered to the user may be enhanced.

In addition, the filter rod 22 may include at least one capsule 23. Here, the capsule 23 may perform the function of generating a flavor, and may perform the function of generating an aerosol. For example, the capsule 23 may have a structure in which a liquid containing a fragrance is wrapped with a film. The capsule 23 may have a spherical or cylindrical shape, but is not limited thereto.

Referring to FIG. 5, the cigarette 3 may further include a shear plug 33. The shear plug 33 may be located on one side of the tobacco rod 31 opposite to the filter rod 32. The shear plug 33 may prevent the tobacco rod 31 from being detached to the outside, and may prevent the aerosol liquefied from the tobacco rod 31 during smoking from flowing into the aerosol generating device 1 (FIGS. 1 to 3).

The filter rod 32 may include a first segment 321 and a second segment 322. Here, the first segment 321 may correspond to the first segment of the filter rod 22 of FIG. 4, and the second segment 322 may correspond to the third segment of the filter load 22 of FIG.4.

The diameter and overall length of the cigarette 3 may correspond to the diameter and overall length of the cigarette 2 of FIG. 4. For example, the length of the shear plug 33 may be about 7 mm, the length of the tobacco rod 31 may be about 15 mm, the length of the first segment 321 may be about 12 mm, and the length of the second segment 322 may be about 14 mm, but they are not limited thereto.

The cigarette 3 may be wrapped by at least one wrapper 35. The wrapper 35 may be formed with at least one hole through which the external air flows in or an internal gas flows out. For example, the shear plug 33 may be wrapped by a first wrapper 351, the tobacco rod 31 may be wrapped by a second wrapper 352, the first segment 321 may be wrapped by a third wrapper 353, and the second segment 322 may be wrapped by a fourth wrapper 354. Then, the entire cigarette 3 may be repackaged by a fifth wrapper 355.

In addition, the fifth wrapper 355 may be formed with at least one perforation 36. For example, the perforation 36 may be formed in a region surrounding the tobacco rod 31, but is not limited thereto. The perforation 36 may serve to transfer the heat generated by the heater 13 shown in FIGS. 2 and 3 to the interior of the tobacco rod 31.

In addition, the second segment 322 may include at least one capsule 34. Here, the capsule 34 may perform a function of generating a flavor and may perform a function to generate an aerosol. For example, the capsule 34 may have a structure in which a liquid containing a fragrance is wrapped with a film. The capsule 34 may have a spherical or cylindrical shape, but is not limited thereto.

The first wrapper 351 may be a general filter wrapping paper to which a metal foil such as an aluminum foil is bonded. For example, the total thickness of the first wrapper 351 may be within a range of 45 µm to 55 µm, and may preferably be 50.3 µm. In addition, the thickness of the metal foil of the first wrapper 351 may be within a range of 6 µm to 7 µm, and may preferably be 6.3 µm. In addition, the basis weight of the first wrapper 351 may be within a range of 50 g/m² to 55 g/m², and may preferably be 53 g/m².

The second wrapper 352 and the third wrapper 353 may be formed of common filter wrapping paper. For example, the second wrapper 352 and the third wrapper 353 may be porous wrapping paper or non-porous wrapping paper.

For example, the porosity of the second wrapper 352 may be 35000 CU, but is not limited thereto. In addition, the thickness of the second wrapper 352 may be within a range of 70 µm to 80 µm, and may preferably be 78 µm. In addition, the basis weight of the second wrapper 352 may be within a range of 20 g/m² to 25 g/m², and may preferably be 23.5 g/m².

For example, the porosity of the third wrapper 353 may be 24000 CU, but is not limited thereto. In addition, the thickness of the third wrapper 353 may be within a range of 60 µm to 70 µm, and may preferably be 68 µm. In addition, the basis weight of the third wrapper 353 may be within a range of 20 g/m² to 25 g/m², and may preferably be 21 g/m².

The fourth wrapper 354 may be formed of polylactic acid (PLA) laminated paper. Here, the PLA laminated paper means three-ply paper that includes a paper layer, a PLA layer, and a paper layer. For example, the thickness of the fourth wrapper 354 may be within a range of 100 µm to 120 µm, and may be preferably 110 µm. In addition, the basis weight of the fourth wrapper 354 may be within a range of 80 g/m² to 100 g/m², and may preferably be 88 g/m².

The fifth wrapper 355 may be formed of sterilized paper (MFW). Here, the sterilized paper (MFW) means paper specially prepared so that the tensile strength, the water resistance, the smoothness, and the like are enhanced over ordinary paper. For example, the basis weight of the fifth wrapper 355 may be within a range of 57 g/m² to 63 g/m², and may preferably be 60 g/m². In addition, the thickness of the fifth wrapper 355 may be within a range of 64 µm to 70 µm, and may preferably be 67 µm.

The fifth wrapper 355 may include a predetermined material. Here, an example of the predetermined material may be silicone, but is not limited thereto. For example, silicone has properties such as heat resistance with little change with temperature, oxidation resistance, resistance to various chemicals, water repellency, or electrical insulation. However, any material, even one that is not silicone, may be applied (or coated) to the fifth wrapper 355 without limitation as long as it has the above-described properties.

The shear plug 33 may be made of cellulose acetate. As an example, the shear plug 33 may be manufactured by adding a plasticizer (e.g., triacetin) to a cellulose acetate tow. The mono denier of the filament constituting the cellulose acetate tow may be within a range of 1.0 to 10.0, and may preferably be within a range of 4.0 to 6.0. More preferably, the mono denier of the filaments of the shear plug 33 may be 5.0. In addition, the cross-section of the filament constituting the shear plug 33 may be Y-shaped. The total denier of the shear plug 33 may be within a range of 20000 to 30000, preferably in a range of 25000 to 30000. More preferably, the total denier of the shear plug 33 may be 28000.

In addition, when necessary, the shear plug 33 may include at least one channel, and a cross-sectional shape of the channel may be manufactured in various shapes.

The tobacco rod 31 may correspond to the tobacco rod 21 described above with reference to FIG. 4. Therefore, a specific description of the tobacco rod 31 will be omitted below.

A first segment 321 may be made of cellulose acetate. For example, the first segment may be a tubular structure including a hollow therein. The first segment 321 may be manufactured by adding a plasticizer (e.g., triacetin) to the cellulose acetate tow. For example, the mono denier and total denier of the first segment 321 may be the same as the mono denier and total denier of the shear plug 33.

A second segment 322 may be made of cellulose acetate. The mono denier of the filaments that constitute the second segment 322 may be within a range of 1.0 to 10.0, and preferably within a range of 8.0 to 10.0. More preferably, the mono denier of the filaments of the second segment 322 may be 9.0. In addition, the cross-section of the filaments of the second segment 322 may be Y-shaped. The total denier of the second segment 322 may be within a range of 20000 to 30000, and may preferably be 25000.

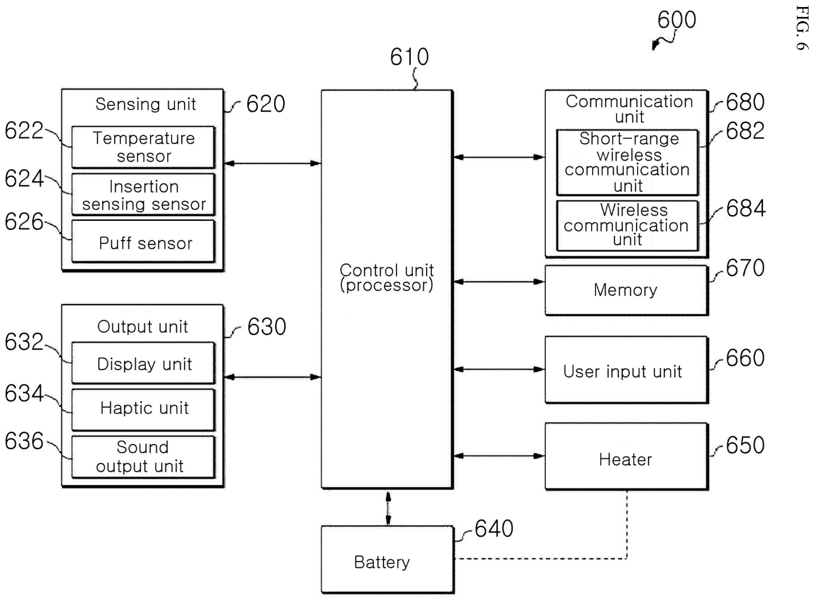

FIG. 6 is a block diagram of an aerosol generating device 600 according to another embodiment.

The aerosol generating device 600 may include a control unit 610, a sensing unit 620, an output unit 630, a battery 640, a heater 650, a user input unit 660, a memory 670, and a communication unit 680. However, the internal structure of the aerosol generating device 600 is not limited to that shown in FIG. 6. In other words, it may be understood by those skilled in the art that, depending on the design of the aerosol generating device 600, some of the components shown in FIG. 6 may be omitted or new components may be further added.

The battery 640, the heater 650, and the control unit 610 of FIG. 6 may perform substantially the same functions as those of the batteries, the heaters, and the control units of FIGS. 1 to 3, and redundant descriptions thereof will be omitted, and modified or added components and operations will be mainly described. The sensing unit 620 may sense a state of the aerosol generating device 600 or a state around the aerosol generating device 600 and transmit the sensed information to the control unit 610. Based on the sensed information, the control unit 610 may control the aerosol generating device 600 to perform various functions, such as controlling operation of the heater 650, limiting smoking, determining whether to insert an aerosol generating article (e.g., a cigarette, a cartridge, or the like), displaying a notification, and the like.

The sensing unit 620 may include at least one of a temperature sensor 622, an insertion sensing sensor 624, and a puff sensor 626, but is not limited thereto.

The temperature sensor 622 may sense the temperature at which the heater 650 (or aerosol generating material) is heated. The aerosol generating device 600 may include a separate temperature sensor that senses the temperature of the heater 650, or the heater 650 itself may serve as a temperature sensor. Alternatively, the temperature sensor 622 may be disposed around the battery 640 to monitor the temperature of the battery 640.

The insertion sensing sensor 624 may sense insertion and/or removal of an aerosol generating article. For example, the insertion sensing sensor 624 may include at least one of a film sensor, a pressure sensor, a light sensor, a resistive sensor, a capacitive sensor, an inductive sensor, and an infrared sensor, and may sense a signal change as the aerosol generating article is inserted and/or removed.

The puff sensor 626 may sense the user's puff based on various physical changes in the airflow passage or airflow channel. For example, the puff sensor 626 may sense a user's puff based on any one of a temperature change, a flow change, a voltage change, and a pressure change.

In addition to the above-described sensors 622 to 626, the sensing unit 620 may further include at least one of a temperature/humidity sensor, a barometric pressure sensor, a geomagnetic sensor, an acceleration sensor, a gyroscope sensor, a position sensor (e.g., GPS), a proximity sensor, and an RGB (illuminance) sensor. Since the function of each of the sensors may be intuitively inferred by a person skilled in the art from its name, a detailed description thereof may be omitted.

The output unit 630 may output and provide information on the state of the aerosol generating device 600 to the user. The output unit 630 may include at least one of a display unit 632, a haptic unit 634, and a sound output unit 636, but is not limited thereto. When the display unit 632 and a touch pad form a layered structure to form a touch screen, the display unit 632 may be used as an input device in addition to an output device.

The display unit 632 may visually provide information about the aerosol generating device 600 to a user. For example, the information about the aerosol generating device 600 may refer to various information such as a charge/discharge state of the battery 640 of the aerosol generating device 600, a preheating state of the heater 650, an insertion/removal state of an aerosol generating article, or a state in which use of the aerosol generating device 600 is restricted (e.g., abnormal article detection), and the display unit 632 may output the information to the outside. The display unit 632 may be, for example, a liquid crystal display panel (LCD), an organic light-emitting display panel (OLED), or the like. In addition, the display unit 632 may be in the form of an LED element.

The haptic unit 634 may convert an electrical signal into a mechanical stimulus or an electrical stimulus to tactilely provide information about the aerosol generating device 600 to a user. For example, the haptic unit 634 may include a motor, a piezoelectric element, or an electrical stimulation device.

The sound output unit 636 may audibly provide information about the aerosol generating device 600 to a user. For example, the sound output unit 636 may convert an electrical signal into a sound signal and output the sound signal to the outside.

The battery 640 may supply power used by the aerosol generating device 600 to operate. The battery 640 may supply power such that the heater 650 may be heated. In addition, the battery 640 may supply power necessary for operation of other components (e.g., the sensing unit 620, the output unit 630, the user input unit 660, the memory 670, and the communication unit 680) included in the aerosol generating device 600. The battery 640 may be a rechargeable battery or a disposable battery. For example, the battery 640 may be a lithium polymer (LiPoly) battery, but is not limited thereto.

The heater 650 may receive power from the battery 640 to heat the aerosol generating material. Although not shown in FIG. 6, the aerosol generating device 600 may further include a power conversion circuit (e.g., a DC/DC converter) that converts power of the battery 640 to supply to the heater 650. In addition, when the aerosol generating device 600 generates an aerosol in an induction heating manner, the aerosol generating device 600 may further include a DC/AC converter that converts a direct current power source of the battery 640 into an alternating current power source.

The control unit 610, the sensing unit 620, the output unit 630, the user input unit 660, the memory 670, and the communication unit 610 may receive power from the battery 640 and perform functions. Although not shown in FIG. 6, a power conversion circuit, for example, a low dropout (LDO) circuit or a voltage regulator circuit, which converts power of the battery 640 to supply to respective components, may be further included.

In one embodiment, the heater 650 may be formed of any suitable electrically resistive material. For example, a suitable electrically resistive material may be a metal or metal alloy including titanium, zirconium, tantalum, platinum, nickel, cobalt, chromium, hafnium, niobium, molybdenum, tungsten, tin, gallium, manganese, iron, copper, stainless steel, nichrome, and the like, but is not limited thereto. In addition, the heater 650 may be implemented as a metal wire, a metal plate on which an electrically conductive track is disposed, a ceramic heating element, or the like, but is not limited thereto.

In another embodiment, the heater 650 may be an induction heating type heater. For example, the heater 650 may include a susceptor that heats up via a magnetic field applied by a coil, thereby heating the aerosol generating material.

In an embodiment, the heater 650 may include a plurality of heaters. For example, the heater 650 may include a first heater for heating a cigarette and a second heater for heating a liquid.

The user input unit 660 may receive input information from the user or output information to the user. For example, the user input unit 660 may include a key pad, a dome switch, a touch pad (such as a contact capacitive type, a pressure resistive type, an infrared sensing type, a surface ultrasonic conduction type, an integrated tension measurement type, and a piezoelectric effect type), a jog wheel, and a jog switch, but is not limited thereto. In addition, although not shown in FIG. 6, the aerosol generating device 600 may further include a connection interface such as a universal serial bus (USB) interface or the like, and may be connected to another external device to transmit and receive information or charge the battery 640 through the connection interface such as the USB interface or the like.

The memory 670 is hardware for storing various types of data processed in the aerosol generating device 600 and may store data processed in the control unit 610 and data to be processed therein. The memory 670 may include at least one type of storage medium selected from a flash memory type, a hard disk type, a multimedia card micro type, a card type memory (such as an SD or XD memory), a random access memory (RAM), a static random access memory (SRAM), a read-only memory (ROM), an electrically erasable programmable read-only storage (EEPROM), a programmable read only memory (PROM), a magnetic memory, a magnetic disk, and an optical disc. The memory 670 may store the operating time of the aerosol generating device 600, a maximum number of puffs, a current number of puffs, at least one temperature profile, data on the user's smoking pattern, and the like.

The communication unit 680 may include at least one component for communication with another electronic device. For example, the communication unit 680 may include a short-range communication unit 682 and a wireless communication unit 684.

The short-range wireless communication unit 682 may include a Bluetooth communication unit, a Bluetooth low energy (BLE) communication unit, a near field communication unit, a WLAN (Wi-Fi) communication unit, Zigbee communication unit, an infrared data association (IrDA) communication unit, Wi-Fi Direct (WFD) communication unit, an ultra-wideband (UWB) communication unit, Ant+ communication unit, and the like, but is not limited thereto.

The wireless communication unit 684 may include a cellular network communication unit, an Internet communication unit, a computer network (e.g., LAN or WAN) communication unit, and the like, but is not limited thereto. The wireless communication unit 684 may use subscriber information (e.g., an International Mobile Subscriber Identity (IMSI)) to confirm and authenticate the aerosol generating device 600 within the communication network.

The control unit 610 may control the overall operation of the aerosol generating device 600. In an embodiment, the control unit 610 may include at least one processor. The processor may be implemented as an array of multiple logic gates, or may be implemented as a combination of a general-purpose microprocessor and a memory storing a program that may be executed on the microprocessor. In addition, those skilled in the art may understand that the process may also be implemented as other forms of hardware.

The control unit 610 may control the temperature of the heater 650 by controlling the supply of the power of the battery 640 to the heater 650. For example, the control unit 610 may control power supply by controlling switching of a switching element between the battery 640 and the heater 650. In another example, the heating direct circuit may control the power supply to the heater 650 according to a control instruction of the control unit 610.

The control unit 610 may analyze a result sensed by the sensing unit 620 and control processes to be performed thereafter. For example, based on a result sensed by the sensing unit 620, the control unit 610 may control the power supplied to the heater 650 such that the operation of the heater 650 is started or ended. For another example, based on a result sensed by the sensing unit 620, the control unit 610 may control the amount of power supplied to the heater 650 and the time at which the power is supplied so that the heater 650 may be heated to a predetermined temperature or may maintain an appropriate temperature.

The control unit 610 may control the output unit 630 based on a result sensed by the sensing unit 620. For example, when the number of puffs counted through the puff sensor 626 reaches a preset number, the control unit 610 may notify the user through at least one of the display unit 632, the haptic unit 634, and the sound output unit 636 that the aerosol generating device 600 is about to end.

In an embodiment, the control unit 610 may control the power supply time and/or the power supply amount to the heater 650 according to the state of the aerosol generating article sensed by the sensing unit 620. For example, when the aerosol generating article 15 is in an over-humidified state, the control unit 610 may control the power supply time to the induction coil (e.g., the induction coil 124 of FIG. 2) to increase the preheating time compared to a case when the aerosol generating article 15 is in a normal state.

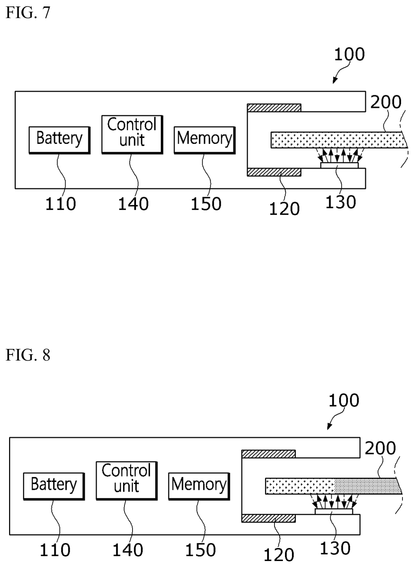

FIG. 7 is a diagram for describing an aerosol generating device according to an embodiment. Referring to FIG. 7, an aerosol generating device 100 according to an embodiment may include a battery 110, a heater 120, an ultrasonic sensing unit 130, a control unit 140, and a memory 150. The battery, the heater, the control unit, and the memory may perform substantially the same functions as those of the batteries, the heaters, the control units, and the memories in FIGS. 1 to 3 and 6, and redundant descriptions will be omitted, and modified or added components and operations will be mainly described.

The ultrasonic sensing unit 130 may output ultrasonic waves according to a plurality of predetermined frequencies to an aerosol generating article 200 and receive ultrasonic waves reflected from the aerosol generating article 200. The ultrasonic sensing unit 130 may be disposed inside the aerosol generating device 100, and may be disposed to face an accommodating space in which the aerosol generating article 200 is accommodated. The ultrasonic sensing unit 130 may include a transducer that outputs an ultrasonic signal and receives reflected ultrasonic waves.

The transducer may output ultrasonic waves toward an accommodating space, receive the ultrasonic waves reflected from the accommodating space, and generate an electrical signal corresponding to the received ultrasonic waves.

The transducer may include a piezoelectric element. The piezoelectric element may be a material capable of generating a physical vibration when power is applied, and converting the physical vibration into an electrical signal when the physical vibration is applied. Accordingly, when the power of the battery 110 (e.g., the battery 110 of FIGS. 1 to 4) is applied to the transducer, ultrasonic waves may be generated by the piezoelectric element. Ultrasonic waves generated from the transducer may propagate toward the accommodating space, be reflected by an object accommodated in the accommodating space, and be received back by the transducer. The piezoelectric element may generate an electrical signal by vibration due to the ultrasonic waves received by the transducer.

For example, the transducer may receive ultrasonic waves reflected from the aerosol generating article 200 while simultaneously outputting ultrasonic waves to the accommodating space to generate an electrical signal, but is not limited thereto, and may receive ultrasonic waves received from a separate reflector as described below.

As another example, the transducer may receive ultrasonic waves reflected from the aerosol generating article 200 to generate an electrical signal, while ceasing to output ultrasonic waves for a period of time.

In addition, the transducer may sequentially output ultrasonic signals according to different frequencies preset under the control of the control unit 140 and receive ultrasonic waves reflected from the aerosol generating article 200 to generate an electrical signal.

In addition, the transducer may adjust the frequency of the output ultrasonic signals under the control of the control unit 140.

The transducer may be disposed to be spaced apart from the heater 120 along the longitudinal direction of the aerosol generating device 100. This may reduce the effect that the transducer is subjected to from the heat generated by the heater 120, and the transducer may smoothly receive ultrasonic waves reflected from the aerosol generating article 200 even while the heater 120 is operating.

The transducer may be disposed adjacent to the aerosol generating article 200 so as to be able to output ultrasonic waves to, and smoothly receive ultrasonic waves reflected from, the aerosol generating article 200. For example, with the aerosol generating article 200 received in the accommodating space, the transducer may be in direct contact with the outer surface of the aerosol generating article 200, or may be adjacent to the outer surface of the aerosol generating article 200 but spaced a fine distance from the outer surface of the aerosol generating article 200.

The ultrasonic sensing unit 130 according to an embodiment may sense objects of various materials without being affected by the surface of the sample to be irradiated.

The ultrasonic sensing unit 130 may sense an object or measure a distance from the ultrasonic sensing unit 130 in a non-contact manner. The ultrasonic signal output from the transducer may be reflected from the sample and incident on a receiver.

When the receiver receives the reflected ultrasonic waves, the ultrasonic waves may be converted into an electric signal through the piezoelectric element. The distance between the ultrasonic sensing unit 130 and the sample may be calculated by the propagation time of the sound. In other words, the time difference between the output time of the ultrasonic signal and the reception time of the reflected ultrasonic waves, that is, the time lag is measured, and the distance from the ultrasonic sensing unit 130 to the sample may be calculated based on the propagation speed of the sound. In a room temperature environment, the propagation speed of sound in the air may be measured to be about 344 m/s.

The sensing accuracy of the ultrasonic sensing unit 130 may be affected by the temperature. The ultrasonic sensing unit 130 according to an embodiment may further include a compensation circuit for compensating for the influence of the temperature, and the compensation circuit may measure an offset generated by the temperature in advance and remove the offset generated in consideration of an actual measurement environment.

The ultrasonic sensing unit 130 may include a plurality of transducers. The plurality of transducers may output ultrasonic signals having different frequencies under the control of the control unit 140 and receive reflected ultrasonic waves corresponding thereto.

Alternatively, the ultrasonic sensing unit 130 may include one transducer. The transducer may output ultrasonic signals having a plurality of different frequencies at predetermined time intervals and receive reflected ultrasonic waves corresponding thereto under the control of the control unit 140.

The type of aerosol generating article 200 may be classified according to the amount or type of the aerosol generating material contained therein. The aerosol generating article 200 according to embodiments may be a solid, a liquid, or powder and may have the properties of reflecting sound waves.

The control unit 140 may determine the type of the aerosol generating article 200 accommodated in the accommodation space based on the electrical signal generated by the ultrasonic sensing unit 130.

In addition, the control unit 140 may control the operation of the heater 120 according to a preset parameter based on the determined type of the aerosol generating article 200.

The proportion of ultrasonic waves reflected from the outer surface of the aerosol generating article 200 among the ultrasonic waves output by the ultrasonic sensing unit 130 toward the aerosol generating article 200 may be determined by the material or shape of the outer surface of the aerosol generating article 200. When the material or shape of the outer surface of the aerosol generating article 200 is different depending on the type of the aerosol generating article 200, the control unit 140 may determine the type of the aerosol generating article 200 by using the electrical signal generated by the ultrasonic sensing unit 130.

The control unit 140 according to an embodiment may control ultrasonic signals having a plurality of different frequencies to be output from the transducer and may analyze the reflected ultrasonic waves according to the plurality of different frequencies, respectively, to analyze the aerosol generating article 200.

When ultrasonic waves propagate from one medium to another, some waves change the propagation direction at the boundary surface and return to the original medium, and the reflected signal may be received by the transducer as reflected ultrasonic waves.

In addition, the ultrasonic signal loses strength energy as it passes through the medium, resulting in a reduction in amplitude and intensity, which may appear as a reduction in the intensity of the reflected ultrasonic signal. The attenuation of the ultrasonic signal may be proportional to the frequency value.

Accordingly, the control unit 140 may analyze the constituent materials of the aerosol generating article 200 using the time difference value between the transmission time of the output ultrasonic waves and the reception time of the reflected ultrasonic waves corresponding thereto according to the plurality of frequencies and the intensity difference value between the intensity of the output ultrasonic waves and the intensity of the reflected ultrasonic waves.

The ultrasonic sensing unit 130 may output a first ultrasonic signal having a first frequency and a second ultrasonic signal having a second frequency to the aerosol generating article 200. At this time, the operation of the first ultrasonic signal and the second ultrasonic signal may be performed by a plurality of transducers outputting respective ultrasonic signals as described above, or by one transducer outputting a first ultrasonic signal and a second ultrasonic signal sequentially. In the embodiment, an example in which one transducer sequentially outputs a first ultrasonic signal and a second ultrasonic signal will be described.

The transducer may receive a first reflected ultrasonic signal, which is generated when the first ultrasonic signal is reflected from the aerosol generating article 200, and a second reflected ultrasonic signal, which is generated when the second ultrasonic signal is reflected from the aerosol generating article 200.

The control unit 140 may calculate a first time difference value between the reception times of the first ultrasonic signal and the first reflected ultrasonic signal and a first intensity difference value between the intensities of the first ultrasonic signal and the first reflected ultrasonic signal.

In addition, the control unit 140 may calculate a second time difference value between the reception times of the second ultrasonic signal and the second reflected ultrasonic signal and a second intensity difference value between the intensities of the second ultrasonic signal and the second reflected ultrasonic signal.

The control unit 140 may use the first time difference value, the first intensity difference value, the second time difference value, and the second intensity difference value to determine the type of the aerosol generating article 200. For example, the control unit 140 may calculate an average of the first time difference value and the second time difference value and calculate an average of the first intensity difference value and the second intensity difference value, thereby determining the type of the aerosol generating article 200 using the respective averages.

Since the attenuation of the ultrasonic signal is proportional to the frequency value, the ultrasonic sensing unit 130 may obtain significant signal attenuation parameters from the aerosol generating article 200 having various media types by outputting different frequency signals.

In other words, when only one frequency signal is output to the aerosol generating article 200, attenuation of the ultrasonic signal may not be significantly generated depending on the type of medium constituting the aerosol generating article 200. However, since the ultrasonic sensing unit 130 according to the embodiment outputs a plurality of different frequencies to the aerosol generating article 200 to obtain a signal attenuation value therefor, there is a technical effect that it is possible to more accurately determine the type of medium constituting the aerosol generating article 200.

In addition, the control unit 140 may analyze constituent materials for each region of the aerosol generating article 200 by assigning different weights for a plurality of frequencies. In other words, the ultrasonic signal having a frequency at which the measured attenuation value for the materials constituting the aerosol generating article 200 is greater than the predetermined threshold may be given a weight greater than 1 to analyze the type of the medium, thereby improving the accuracy of the type analysis of the aerosol generating article 200.

FIG. 8 is a diagram for describing an aerosol generating device according to an embodiment. Referring to FIG. 8, the control unit 140 may analyze constituent materials of each region of the aerosol generating article 200 by using output ultrasonic waves having a plurality of frequencies and reflected ultrasonic waves corresponding thereto.

The ultrasonic sensing unit 130 may output a first ultrasonic signal having a first frequency to a first region of the aerosol generating article 200 and a second ultrasonic signal having a second frequency to a second region of the aerosol generating article 200.

The transducer may receive a first reflected ultrasonic signal, which is generated when the first ultrasonic signal is reflected from a first region of the aerosol generating article 200, and a second reflected ultrasonic signal, which is generated when the second ultrasonic signal is reflected form a second region of the aerosol generating article 200.

The control unit 140 may calculate a first time difference value between the reception times of the first ultrasonic signal and the first reflected ultrasonic signal and a first intensity difference value between the intensities of the first ultrasonic signal and the first reflected ultrasonic signal.

In addition, the control unit 140 may calculate a second time difference value between the reception times of the second ultrasonic signal and the second reflected ultrasonic signal and a second intensity difference value between the intensities of the second ultrasonic signal and the second reflected ultrasonic signal.

The control unit 140 may use the first time difference value and the first intensity difference value to determine the type of material constituting the first region of the aerosol generating article 200.

In addition, the control unit 140 may use the second time difference value and the second intensity difference value to determine the type of material constituting the second region of the aerosol generating article 200.

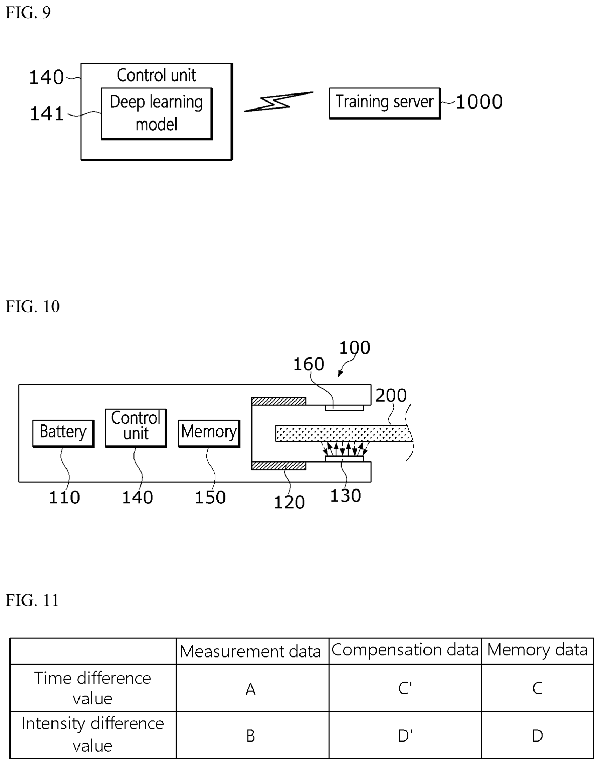

FIG. 9 is a diagram for describing an operation of a control unit according to another embodiment. Referring to FIG. 9, the control unit 140 may include a deep learning model 141 that is trained with the correlations of the output ultrasonic waves and reflected ultrasonic waves with the constituent materials of the aerosol generating article 200 by using the output ultrasonic waves and the reflected ultrasonic waves as an input layer, so that the constituent materials of the aerosol generating article 200 are an output layer with respect to the input output ultrasonic waves and reflection ultrasonic waves.

The deep learning model 141 of the control unit 140 may not perform self-learning, but the deep learning model 141 may be generated by transmitting training data to a remote training server 1000 and applying parameters received from the training server 1000 to a stored deep learning algorithm.

The training server 1000 may receive output ultrasonic waves and reflected ultrasonic waves, which are training data, from a plurality of aerosol generating devices 100 and may learn these learning data to extract parameters. The training server 1000 may learn the training data by using, for example, a deep learning technique, but is not limited thereto, and may learn the training data and extract parameters by using various techniques.

The training server 1000 receives a signal extracted from the reflected ultrasonic signal in the time domain as an input and determines an input to a classifier by extracting a one-dimensional (1D) feature vector for each time through a 1D convolution layer. At this time, the training server 1000 calculates a signal in the time-frequency domain, that is, a 2D spectrogram, by performing a short-time Fourier transform on the received reflected ultrasonic signal by moving a window having a certain time interval, converts the calculated 2D spectrogram into a 1D signal for each time, and then performs convolution on the 1D signal. When necessary, the training server 1000 may first perform convolution by a convolution filter before converting the calculated 2D spectrogram into a 1D signal for each time.

The convolution may be performed through one or more convolutional layers. In this way, the 1D feature vectors calculated through the one or more convolutional layers and configured for each time are determined as inputs of the classifier.

The classifier is formed as a multi-layer artificial neural network. The classifier using such an artificial neural network is determined as a final classifier model by allowing the classifier learn the weight values using the training data in an artificial neural network having the same layer configuration. Here, the weight means a weight of a connection value of one or more layers of the artificial neural network.

In addition, the above-described convolutional layer that calculates the 1D feature vector input to the classifier as described above and the above-described classifier formed as a multilayer artificial neural network are collectively referred to as a convolutional neural network (CNN). At this time, the weight may refer to a weight of a connection value of one or more layers of the artificial neural network or a convolutional filter value in a convolutional layer. This means that not only a weight of a connection value of one or more layers of the artificial neural network may be determined through machine learning, but also a convolutional filter value of a convolutional layer may be finally determined through machine learning. The training server 1000 inputs training data to an artificial neural network and performs optimization by the gradient descent method in a direction of minimizing a loss between an output value and an actual correct answer.

A convolutional neural network (CNN) model is determined by the weight or the convolutional layer filter value finally determined by such training, and the convolutional neural network may be applied to the deep learning model 141 of the aerosol generating device 100 through a communication network.

The deep learning model of the control unit to which the weight value received from the training server is applied may estimate a probability value for each material constituting the aerosol generating article 200 in which the corresponding ultrasonic signal is finally reflected with respect to the input output ultrasonic waves and the reflected ultrasonic waves. From this, the material having the greatest probability value may be finally determined as the material constituting the aerosol generating article 200.

FIG. 10 is a diagram for describing an aerosol generating device according to another embodiment. Referring to FIG. 10, an aerosol generating device 100 according to an embodiment may include a battery 110, a heater 120, an ultrasonic sensing unit 130, a control unit 140, a memory 150, and a temperature sensor 160. The battery, the heater, the ultrasonic sensing unit, and the memory perform substantially the same functions as the batteries, the heaters, the ultrasonic sensing units, and the memories in FIGS. 1, 4, and 7, and redundant descriptions will be omitted, and modified or added components and operations will be mainly described.

The temperature sensor 160 may be disposed at a periphery of the aerosol generating article 200. The temperature sensor 160 may measure the ambient temperature of the aerosol generating article 200 to generate temperature data.

The control unit 140 may compensate for the time difference value by using the temperature data measured by the temperature sensor 160. The measurement precision of ultrasonic waves is greatly affected by the air temperature. As the air temperature changes, the propagation of ultrasonic waves is affected by the temperature, which decreases by 0.17% per unit degree Celsius. This change affects the propagation time, which in turn distorts the time difference value.

The aerosol generating device 100 may be heated to a very high temperature by the heater 120, and the temperature deviation with time changes in a process before operation, during operation, and after operation is very large. Thus, in the absence of such a temperature compensation function, it is not possible to measure the accurate distance between the medium of the aerosol generating article 200 and the ultrasonic sensing unit 130 through the time difference value.

Thus, the control unit 140 according to an embodiment may use the temperature data measured by the temperature sensor 160 to reflect such a decrease in the propagation speed of the ultrasonic waves and reflect it in the time difference value, thereby calculating an accurate distance value between the aerosol generating articles 200 regardless of the operation of the heater 120.

In addition, the control unit 140 may analyze the state of the constituent materials of the aerosol generating article 200 using the temperature data measured by the temperature sensor 160, the output ultrasonic waves according to the plurality of frequencies, and the reflected ultrasonic waves corresponding thereto.

For example, an aerosol generating material within the aerosol generating article 200 may be exhausted as the aerosol generating device 100 performs a smoking operation with the aerosol generating article 200. In this case, the used aerosol generating article 200 must be discarded by the user. When a user reuses the aerosol generating article 200 that has already been used, the user may not feel sufficient smoking satisfaction from the aerosol generating article 200 being reused, because at least a portion of the aerosol generating material is exhausted. Accordingly, when the aerosol generating article 200 accommodated in the accommodating space has been reused, the aerosol generating device 100 may determine this and control the heater 120 not to be heated.

In an embodiment, the control unit 140 may analyze the state of the constituent materials of the aerosol generating article 200 by using the temperature data measured by the temperature sensor 160, the output ultrasonic waves according to the plurality of frequencies, and the reflected ultrasonic waves corresponding thereto and control the heater 120 not to be heated when it is determined that the aerosol generating article 200 is reused.

The control unit 140 calculates the temperature-compensated time difference value and intensity difference value according to the temperature data and compares the time difference value and the intensity difference value stored in the memory to retrieve similar data values. The control unit 140 may extract the constituent material of the aerosol generating article 200 having the most similar time difference value and intensity difference value and compare the extracted data value and the completely temperature-compensated data value to determine according to the difference value whether the constituent material of the aerosol generating articles 200 has already been used.

Referring to FIG. 11, when the temperature in the accommodating space of the aerosol generating device 100 rises due to the use of the heater 120, distortion of the ultrasonic signal occurs, resulting in variation in the time difference value and the intensity difference value. The control unit 140 calculates compensation data obtained by compensating for such distortion using the temperature data. After retrieving similar data stored in the memory data, the control unit 140 extracts a material corresponding to the data as a constituent material of the aerosol generating article 200. The control unit 140 then compares the memory data and the compensation data to determine whether the constituent material of the aerosol generating article 200 has already been used by the difference.

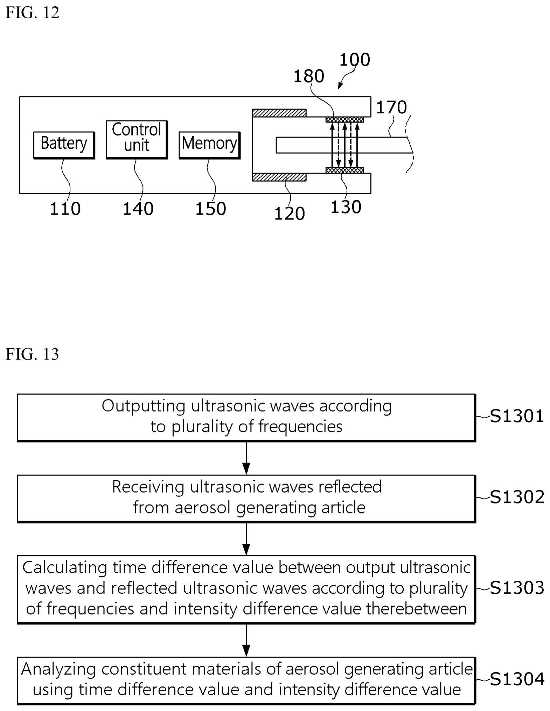

FIG. 12 is a diagram for describing an aerosol generating device according to still another embodiment. Referring to FIG. 12, an aerosol generating device 100 according to an embodiment may include a battery 110, a heater 120, an ultrasonic sensing unit 130, a control unit 140, a memory 150, a liquid storage unit 170, and a reflecting unit 180. The battery, the heater, the liquid storage unit, the ultrasonic sensing unit, and the memory perform substantially the same functions as the batteries, the heaters, the liquid storage units, the ultrasonic sensing units, and the memories in FIGS. 1, 4, and 7, and redundant descriptions will be omitted, and modified or added components and operations will be mainly described.

The reflecting unit 180 may be spaced apart from the liquid storage unit 170 by a predetermined distance. The reflecting unit 180 may be disposed to face the ultrasonic sensing unit 130 with the liquid storage unit 170 at the center. The reflecting unit 180 may be disposed at a position where the ultrasonic wave output from the ultrasonic sensing unit 130 is incident after passing through the liquid storage unit 170, and may reflect the incident ultrasonic waves and transmit the reflected ultrasonic waves to the ultrasonic sensing unit 130 side.

The ultrasonic sensing unit 130 may output ultrasonic waves according to a plurality of predetermined frequencies to the liquid storage unit 170 and receive ultrasonic waves reflected from the liquid storage unit 170 and the reflecting unit 180.

The control unit 140 may analyze the constituent materials of the aerosol generating article 200 using the time difference value between the transmission time of the output ultrasonic waves and the reception time of the reflected ultrasonic waves corresponding thereto according to the plurality of frequencies and the intensity difference value between the intensity of the output ultrasonic waves and the intensity of the reflected ultrasonic waves.

The control unit 140 may filter the reflected ultrasonic waves. In filtering the reflected ultrasonic waves, the control unit 140 receives and recognizes only the intensity, shape, and signal of a predetermined frequency by filtering ultrasonic waves reflected from a structure other than ultrasonic waves reflected from an actual medium. This allows the control unit 140 to analyze the type of the aerosol generating article 200 stored in the liquid storage unit 170.

When ultrasonic waves propagate from one medium to another, some waves change the propagation direction at the boundary surface and return to the original medium, and the reflected signal may be received by the transducer as reflected ultrasonic waves.

In addition, the ultrasonic signal loses strength energy as it passes through the medium, resulting in a reduction in amplitude and intensity, which may appear as a reduction in the intensity of the reflected ultrasonic signal. The attenuation of the ultrasonic signal may be proportional to the frequency value.

In the case of the liquid stored in the liquid phase storage unit, most of the ultrasonic signals are refracted or transmitted, and thus there is a problem in that it is difficult to receive a sufficient amount of reflected ultrasonic waves for analyzing the constituent materials. The aerosol generating device 100 according to the embodiment may reflect the output ultrasonic waves refracted or transmitted at the liquid storage unit in the direction of the ultrasonic sensing unit 130 by arranging the reflecting unit 180 at a position facing the ultrasonic sensing unit 13 around the liquid storage unit.

Accordingly, the control unit 140 may analyze the constituent material of the aerosol generating article 200 configured in the liquid phase by using the time difference value between the transmission time of the output ultrasonic waves and the reception time of the reflected ultrasonic waves reflected by the reflection plate according to the plurality of frequencies and the intensity difference value between the intensity of the output ultrasonic waves and the intensity of the reflected ultrasonic waves.

FIG. 13 is an operational flowchart of an aerosol generating device according to an embodiment. Referring to FIG. 13, first, the ultrasonic sensing unit outputs ultrasonic waves corresponding to a plurality of predetermined frequencies to the aerosol generating article (S1301).

Next, the ultrasonic sensing unit receives ultrasonic waves reflected from the aerosol generating article (S1302).

Next, the control unit calculates a time difference value between the transmission time of the output ultrasonic waves and the reception time of the reflected ultrasonic waves corresponding thereto according to the plurality of frequencies and an intensity difference value between the intensity of the output ultrasonic waves and the intensity of the reflected ultrasonic waves (S1303).

Next, the control unit analyzes the constituent materials of the aerosol generating article using the time difference value according to the plurality of frequencies and the intensity difference value (S1304).

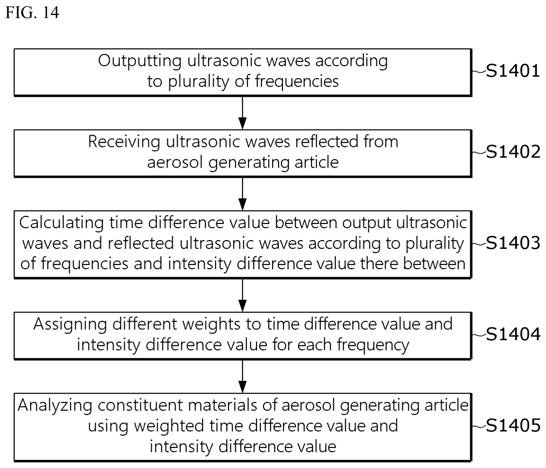

FIG. 14 is an operational flowchart of an aerosol generating device according to an embodiment. Referring to FIG. 14, first, the ultrasonic sensing unit outputs ultrasonic waves corresponding to a plurality of predetermined frequencies to the aerosol generating article (S1401).

Next, the ultrasonic sensing unit receives ultrasonic waves reflected from the aerosol generating article (S1402).

Next, the control unit calculates a time difference value between the transmission time of the output ultrasonic waves and the reception time of the reflected ultrasonic waves corresponding thereto according to the plurality of frequencies and an intensity difference value between the intensity of the output ultrasonic waves and the intensity of the reflected ultrasonic waves (S1403).

Next, the control unit assigns different weights to the time difference value and the intensity difference value for each frequency according to the preset threshold and the setting (S1404).

Next, the control unit analyzes the constituent materials of the aerosol generating article by using the time difference value and the intensity difference value according to the plurality of weighted frequencies (S1405).

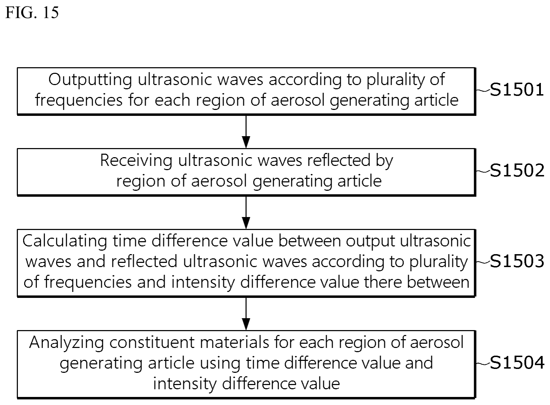

FIG. 15 is an operational flowchart of an aerosol generating device according to an embodiment. Referring to FIG. 15, first, the ultrasonic sensing unit outputs ultrasonic waves having different frequencies for each region of the aerosol generating article (S1501).

Next, the ultrasonic sensing unit receives ultrasonic waves reflected for each region of the aerosol generating article (S1502).

Next, the control unit calculates a time difference value between the transmission time of the output ultrasonic waves and the reception time of the reflected ultrasonic waves corresponding thereto according to the plurality of frequencies and an intensity difference value between the intensity of the output ultrasonic waves and the intensity of the reflected ultrasonic waves (S1503).

Next, the control unit analyzes the constituent materials for each region of the aerosol generating article by using the time difference value and the intensity difference value according to the plurality of frequencies (S1504).

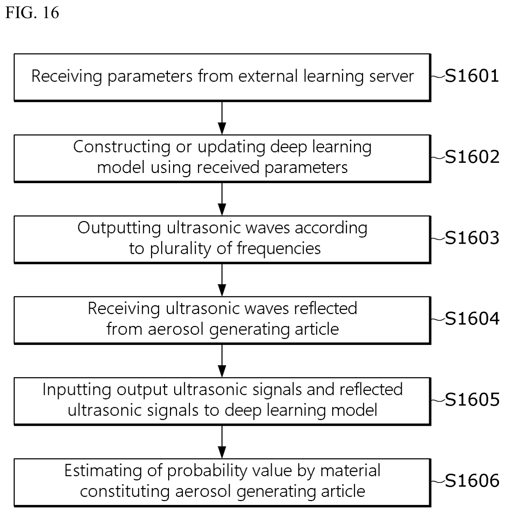

FIG. 16 is an operational flowchart of an aerosol generating device according to an embodiment. Referring to FIG. 16, first, the communication unit performs data communication with an external training server to receive parameters constituting a deep learning model, that is, weight values (S1601).

The control unit constructs a deep learning model using the received parameters or updates the deep learning model that is already stored (S1602).

Next, the ultrasonic sensing unit outputs ultrasonic waves having different frequencies for each region of the aerosol generating article (S1603).

Next, the ultrasonic sensing unit receives ultrasonic waves reflected by each region of the aerosol generating article (S1604).

Next, the control unit inputs the output ultrasonic signal and the reflected ultrasonic signal to the deep learning model (S1605).

Next, the deep learning model estimates a probability value for each material constituting the aerosol generating article from which the corresponding ultrasonic signal is reflected with respect to the input output ultrasonic waves and the reflected ultrasonic waves (S1606).

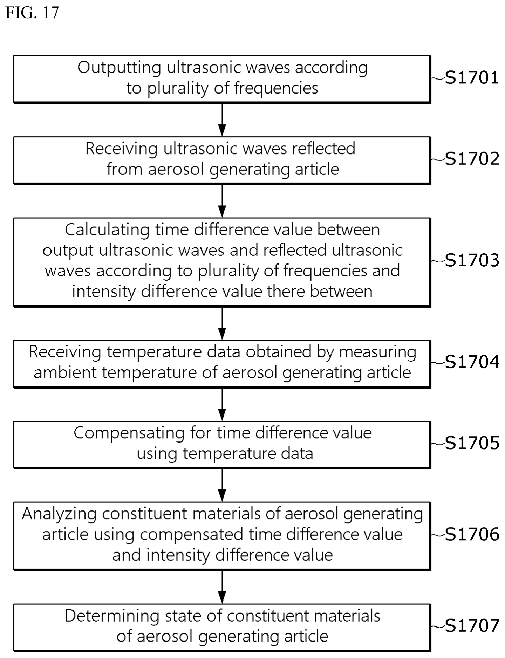

FIG. 17 is an operational flowchart of an aerosol generating device according to an embodiment. Referring to FIG. 17, first, the ultrasonic sensing unit outputs ultrasonic waves corresponding to a plurality of predetermined frequencies to the aerosol generating article (S1701).

Next, the ultrasonic sensing unit receives ultrasonic waves reflected from the aerosol generating article (S1702).

Next, the control unit calculates a time difference value between the transmission time of the output ultrasonic waves and the reception time of the reflected ultrasonic waves corresponding thereto according to the plurality of frequencies and an intensity difference value between the intensity of the output ultrasonic waves and the intensity of the reflected ultrasonic waves (S1703).

Next, the control unit receives temperature data obtained by measuring the ambient temperature of the aerosol generating article from the temperature sensor (S1704).

Next, the control unit compensates for the time difference value by reflecting the decrease in the propagation speed of the ultrasonic waves using the temperature data measured by the temperature sensor and reflecting this in the time difference value (S1705).

Next, the control unit analyzes the constituent materials for each region of the aerosol generating article by using the time difference value according to the plurality of frequencies and the intensity difference value (S1706).

Next, the control unit compares the data value of the constituent material extracted from the memory and the completely temperature-compensated data value and determines according to the difference value whether the constituent material of the aerosol generating article has already been used (S1707).

An embodiment may also be implemented in the form of a recording medium that includes computer-executable instructions, such as program modules, executed by a computer. Computer-readable media may be any available media that may be accessed by a computer and include all volatile and nonvolatile media and removable and non-removable media. Moreover, the computer-readable media may include both computer storage media and communication media. Computer storage media include all volatile and nonvolatile media and removable and non-removable media implemented by any method or technology for storage of information such as computer readable instructions, data structures, program modules, or other data. Communication media typically include computer readable instructions, data structures, other data in a modulated data signal such as program modules, or other transport mechanism and include any information delivery media.

## Claims

1. An aerosol generating device, comprising:
a battery configured to supply power used to operate the aerosol generating device;
a heater configured to heat an aerosol generating article;
an ultrasonic sensing unit configured to output ultrasonic waves corresponding to a plurality of predetermined frequencies to an aerosol generating article and receive ultrasonic waves reflected from the aerosol generating article; and
a control unit configured to analyze constituent materials of the aerosol generating article by using a time difference value between a transmission time of output ultrasonic waves and a reception time of reflected ultrasonic waves corresponding thereto according to the plurality of frequencies and an intensity difference value between an intensity of the output ultrasonic waves and an intensity of the reflected ultrasonic waves.

2. The aerosol generating device of claim 1,
wherein the control unit is configured to analyze the constituent materials of the aerosol generating article by assigning different weights to the plurality of frequencies.

3. The aerosol generating device of claim 1,
wherein the control unit is configured to analyze the constituent materials of the aerosol generating article for each region using the output ultrasonic waves corresponding to the plurality of frequencies and the reflected ultrasonic waves corresponding thereto.

4. The aerosol generating device of claim 1,
wherein the control unit comprises a deep learning model trained to cause the constituent materials of the aerosol generating article to be an output layer with respect to the input output ultrasonic waves and the reflected ultrasonic waves.

5. The aerosol generating device of claim 1, further comprising:
a temperature sensor disposed at a periphery of the aerosol generating article.

6. The aerosol generating device of claim 5,
wherein the control unit is configured to compensate the time difference value by using temperature data measured by the temperature sensor.

7. The aerosol generating device of claim 4,
wherein the control unit is configured to analyze a state of the constituent materials of the aerosol generating article by using the temperature data measured by the temperature sensor, the output ultrasonic waves according to the plurality of frequencies, and the reflected ultrasonic waves corresponding thereto.

8. An aerosol generating device, comprising:
a battery configured to supply power used to operate the aerosol generating device;
a liquid storage unit configured to store an aerosol generating article;
a reflecting unit disposed at a predetermined distance from the liquid storage unit;
an ultrasonic sensing unit configured to output ultrasonic waves corresponding to a plurality of predetermined frequencies to the liquid storage unit and receive ultrasonic waves reflected from the liquid storage unit and the reflecting unit; and
a control unit configured to analyze constituent materials of the aerosol generating article by using a time difference value between a transmission time of output ultrasonic waves and a reception time of reflected ultrasonic waves corresponding thereto according to the plurality of frequencies and an intensity difference value between an intensity of the output ultrasonic waves and an intensity of the reflected ultrasonic waves.
